(19) Europäisches Patentamt
European Patent Office
Office européen des brevets

(11) EP 1 176 004 B1

(12) # EUROPÄISCHE PATENTSCHRIFT

(45) Veröffentlichungstag und Bekanntmachung des Hinweises auf die Patenterteilung:
**19.11.2008 Patentblatt 2008/47**

(21) Anmeldenummer: **01116684.0**

(22) Anmeldetag: **17.07.2001**

(51) Int Cl.:
***B32B 27/36*** *(2006.01)* ***B32B 27/20*** *(2006.01)*
***C08J 5/18*** *(2006.01)* ***C08L 67/02*** *(2006.01)*
***C08K 3/22*** *(2006.01)* ***B29C 55/14*** *(2006.01)*
***B65D 77/20*** *(2006.01)*

(54) **Weisse, biaxial orientierte Polyesterfolie**

Biaxially oriented white polyester film

Feuille en polyester blanche biaxialement étirée

(84) Benannte Vertragsstaaten:
**DE FR GB IT LU TR**

(30) Priorität: **26.07.2000 DE 10036400**

(43) Veröffentlichungstag der Anmeldung:
**30.01.2002 Patentblatt 2002/05**

(60) Teilanmeldung:
**06003461.8 / 1 674 256**

(73) Patentinhaber: **Mitsubishi Polyester Film GmbH**
**65203 Wiesbaden (DE)**

(72) Erfinder:
- **Peiffer, Herbert, Dr.**
**55126 Mainz (DE)**
- **Petersen, Klaus, Dr.**
**65207 Wiesbaden (DE)**
- **Davis, Richard Lee**
**65187 Wiesbaden (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 360 201**
**EP-A- 0 605 130**
**EP-A- 0 942 031**
**WO-A-01/53395**
**WO-A-01/53397**
**US-A- 5 776 592**

Bemerkungen:
Die Akte enthält technische Angaben, die nach dem Eingang der Anmeldung eingereicht wurden und die nicht in dieser Patentschrift enthalten sind.

EP 1 176 004 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine weiße, biaxial orientierte Polyesterfolie mit mindestens einer Basisschicht B, die sich auf Grund ihrer speziellen mechanischen Eigenschaften sehr gut als Deckelfolie, insbesondere als Deckelfolie für Jogurtbecher eignet. Die Erfindung beinhaltet weiterhin ein Verfahren für die Herstellung der Folie und ihre Verwendung.

Eine bekannte Anwendung von biaxial orientierten Polyesterfolien sind Deckel, z.B. Deckel für Jogurtbecher. Sie werden dort alternativ zu Aluminiumfolien eingesetzt. Bei Deckeln aus Polyesterfolie wird derzeit im Wesentlichen zwischen den zwei im Folgenden näher beschriebenen Ausführungsformen unterschieden:

Zum einen Deckel, die nur aus Polyesterfolie bestehen.

Derartige Deckel werden auf der Oberseite der Folie (= Außenseite des Deckels) bedruckt und auf der Unterseite der Folie (= Innenseite des Deckels) mit einem Lack versehen, mit dem die Deckel auf den Becher geklebt werden. Zur Verbesserung der Haltbarkeit des Yogurts müssen sowohl der Becher als auch der Deckel genügend Lichtschutz aufweisen. Dies geschieht in der Regel durch Einfärben der Materialien für den Deckel und für den Becher mit Titandioxid oder mit anderen geeigneten Pigmenten oder Farbstoffen. Eine weitere, wichtige Forderung an die Deckelfolie ist, dass sie auf Grund ihrer ausgewählten mechanischen Eigenschaften beim Abziehen vom Becher nicht delaminiert. Die erforderlichen mechanischen Eigenschaften erhält die Folie durch die biaxiale Streckung und durch eine entsprechend hohe Dicke. Die mechanischen Eigenschaften des Deckels (Steifigkeit, Durchstoßfestigkeit, Weiterreißfestigkeit, etc.) verbessern sich mehr als proportional mit der Dicke der Folie. Für die Deckelanwendung bei Jogurt haben sich Polyesterfolien mit einer Dicke von 30 bis 100 $\mu$m bewährt. Andererseits kann die Dicke der Folie nicht beliebig gesteigert werden, da mit der Dicke die Materialkosten anwachsen und die Siegeltackzeiten, d.h., die Siegeltackzeiten wachsen quadratisch mit der Dicke, was aus wirtschaftlicher Sicht unerwünscht ist.

Neben den o.g. Deckeln, die nur aus Polyesterfolie bestehen, sind auch Deckel, die aus einem Verbund aus transparenter, biaxial orientierter Polyesterfolie und Papier bestehen, bekannt. Beide Materialien werden mittels geeignetem Kleber kaschiert und zu Deckeln verarbeitet. Die erforderliche Steifigkeit des Deckels ergibt sich aus der Kaschierung von Polyesterfolie und Papier zu einem dicken Laminat. Bei dieser Variante wird in der Regel die Seite der Polyesterfolie, die zum Papier hin zu liegen kommt, mit Aluminium metallisiert. Hierdurch bleibt der metallene Charakter des Deckels (im Vergleich zum Deckel aus Aluminiumfolie) erhalten. Die andere Seite der Polyesterfolie (Außenseite der Folie, zeigt vom Verbund weg) wird mit einem geeigneten Kleber beschichtet, mit dem der Deckel dann auf den Becher aus Polypropylen oder Polystyrol geklebt wird.

Die Vorteile von Deckeln, die nur aus Polyesterfolie (ohne Papier) bestehen, liegen auf der Hand:

- Der Deckel aus Polyesterfolie hat eine glatte, hoch glänzende Oberfläche, die eine exzellente Farbwiedergabe garantiert und dadurch optisch sehr ansprechend wirkt.
- Die Folie hat im Vergleich zu konventionellem Material eine bis zu 700 % höhere Durchstoßfestigkeit, was einen wesentlich höheren Produktschutz zur Folge hat.
- Der Deckel ist leicht zu öffnen, ohne dass Fragmente des Deckels am Becher hängen bleiben, wie es bei konventionellen Materialien beobachtet wird. Diese Eigenschaft wird insbesondere vom Verbraucher geschätzt.
- Die vollständige Trennung von Becher und Deckel ist von großem Vorteil für die Rezyklierbarkeit der beiden Materialien. Die Deckelfolie besteht aus thermoplastischem Polyester, der exzellent rezyklierbar ist. Das Produkt ist damit zugleich umweltsicher und umweltfreundlich.
- Weiterhin ist die Polyesterfolie für die Deckelanwendung infolge ihrer hohen Steifigkeit und ihrem guten Gleitvermögen (die Folie weist entsprechend dem Anforderungsprofil niedrige Reibkoeffizienten auf) hervorragend verarbeitbar.
- Außerdem ist der Deckel absolut metallfrei. Dies garantiert ein sehr hohe Sicherheit bei der Metalldedektierung, die bei der Herstellung von Lebensmitteln immer häufiger angewendet wird. Mit der Methode kann damit der Anteil an dem im Füllgut enthaltenen metallischen Bestandteilen mit hoher Genauigkeit bestimmt werden.

Verarbeiter verwenden bestimmte Kriterien für die Weiterverarbeitung der Folien zu Joghurtbechern. Die bei der Herstellung von Joghurtdeckeln üblicher Weise angewandten Größen sind der sogenannte R-Wert und das sogenannte emax-Verhältnis. Der R-Wert kann als Maß für die Orientierung angegeben werden und wird direkt nach der Herstellung der Folie in der Mitte der Folienbahn gemessen. Das $e_{max}$-Verhältnis beschreibt die Orientierungsverteilung über die Folienbahnbreite (das sogenannte BOW) und wird ebenfalls direkt nach der Herstellung der Folie gemessen, jedoch in diskreten Abständen über die gesamte Breite der Folienbahn. Bei transparenten Folien werden daneben noch die üblichen Orientierungsmaße, wie die planare Orientierung $\Delta p$ oder die mittlere Orientierung $n_{av}$ verwendet. Bevor die Folien verarbeitet werden, werden die R-Werte und das $e_{max}$-Verhältnis gemessen. Bei transparenten Folien liegen die Werte für den R-Wert in einem Bereich von 42 bis 48 und für das $e_{max}$-Verhältnis in einem Bereich von 2.2 bis 2.8.

Untersuchungen an weißen Folien haben gezeigt, dass diese Werte nicht von transparenten Folie auf die vorliegenden weißen Folien übertragen werden können. Werden für weiße Folie obige angegebenen Werte eingehalten, so führt dies im allgemeinen zu einer Delaminierung der Folie. Die Folie delaminiert in sich, sie reißt in Dickenrichtung ein, der Riß zerstört die Folie und die Folie reißt weiter ein.

Die oben genannten Eigenschaften werden von den nach dem Stand der Technik bekannten Folien nicht in ihrer Gesamtheit erreicht. So beschreibt beispielsweise die EP-A 0 605 130 eine mehrschichtige Folie für die Deckelanwendung, die mindestens eine opake Schicht aus kristallinem Polyester und mindestens eine transparente Schicht aus kristallinem Polyester enthält. Weiterhin wird die Folie durch einen Deformations-Index beschrieben, der größer/gleich als 2.5 % sein soll. Daneben kann die Folie mit bestimmten Substanzen beschichtet werden, womit die Adhäsion zu Druckfarben und/oder Tinten verbessert wird. Als geeignete Substanzen werden bestimmte Acrylate aufgeführt. Über die R-Werte und das emax-Verhältnis der Folie gibt die Schrift keine Auskunft. Eine nach der EP-A 0 605 130 (Beispiel 1, Längsstrecktemperatur ca. 80 °C, Streckverhältnis bei der Längsstreckung 3.3) nachgestellte Folie delaminierte, außerdem zeigte sie ein schlechtes Verarbeitungsverhalten, da sich die Folie nach dem Ausstanzen zu den Deckeln curlte. Die von der Anmelderin gemessenen R-Werte und das emax-Verhältnis dieser Folie liegen außerhalb dem in dieser Schrift beanspruchten Bereich.

Aus wirtschaftlicher Sicht ist es notwendig, die Kosten für die Herstellung von Deckelfolien permanent zu senken. Ein wesentlicher Hebel hierfür ist die Dicke der Folie. Eine geringere Dicke des Deckels geht direkt einher mit einer Senkung der Materialkosten und führt auf Grund niedriger Siegeltackzeiten zu höheren Abfüllgeschwindigkeiten. Wie oben bereits ausgeführt, kann aber die Dicke des Deckels nicht beliebig verringert werden, da dies zu Verarbeitungsproblemen und zu Problemen beim Abziehen des Deckels vom Becher führt. Deckel aus Polyesterfolie mit zu geringer Dicke neigen zum Einreißen und zum Delaminieren. Eine Produktsicherheit und der Vorteil der 100%igen Trennung von Deckel und Becher ist dann nicht mehr gegeben. Die Gefahr des Einreißens und der Delaminierung des Deckels wird desto größer, umso mehr Pigmente in die Polyesterfolie eingearbeitet werden. Pigmente bilden in der Folie Schwachstellen, an denen die Zerstörung der Folien beim Abziehen vom Becher beginnt.

Die US-A-5,776,592 beschreibt Polyesterfolien, die für Verschlüsse von Bechern für Nahrungsmittel wie Joghurt geeignet sind und beim Abziehen in 45°-Richtung nicht einreißen. Es werden mechanische Parameter bestimmt, die eine Komponente in 45°-Richtung aufweisen.

Aufgabe der Erfindung war es daher, eine weiße, biaxial orientierte Polyesterfolie für die Deckel-Anwendung bereitzustellen, die sich gegenüber den für diesen Einsatzzweck bekannten Polyesterfolien durch verbesserte Eigenschaften auszeichnen. Insbesondere sollte die neue Polyesterfolie durch folgende Eigenschaftskombination gekennzeichnet sein

- sehr gute Verarbeitbarkeit
- sehr gutes Abziehverhalten vom Becher, insbesondere
  - keine Delaminierung und
  - kein Ein- und Weiterreißen
- wirtschaftliche Herstellbarkeit.

Versuche, eine herkömmliche transparente Folie, die sich nach Verarbeiterangaben für die Anwendung als Deckelfolie eignet, mit Pigmenten zu versehen, scheiterten. Die Folie delaminierte beim Abziehen vom Becher.

Gelöst wird die Aufgabe durch eine weiße, biaxial orientierte Polyesterfolie mit einer Gesamtdicke von 10 bis 150 $\mu$m mit mindestens einer Basisschicht B, die dadurch gekennzeichnet ist, daß
sie Füllstoffe in einer Konzentration von mehr als 3 Gew.-%, bezogen auf die Masse der Basisschicht der Folie, enthält,
der R-Wert links und rechts $\leq$ als 45 N/mm$^2$ und
das $e_{max}$-Verhältnis $\leq$ als 2.5 ist,
wobei der R-Wert = ⅓ • ($\sigma_{30\%}$-$\sigma_{0,2\%}$) in N/mm$^2$ ist und

$\sigma_{30\%}$ die Zugspannung in der Folie bei 30 % Dehnung, gemessen unter 45° zur Maschinenrichtung (MD), einmal zur linken und einmal zur rechten Seite der MD-Richtung und

$\sigma_{0,2\%}$ die Zugspannung in der Folie bei 0.2 % Dehnung, gemessen unter 45° zur Maschinenrichtung (MD), einmal zur linken und einmal zur rechten Seite der MD-Richtung ist und

das $e_{max}$-Verhältnis = $\varepsilon_{links}/\varepsilon_{rechts}$ oder $\varepsilon_{rechts}/\varepsilon_{links}$ ist (wobei das Verhältnis definitionsgemäß immer >1 ist) und wobei

$\varepsilon_{links}$ die Reißdehnung der Folie unter 45° zu MD, links, ist und

(fortgesetzt)

$\varepsilon_{rechts}$ die Reißdehnung der Folie unter 45° zu MD, rechts, ist.

Der R-Wert wird direkt nach der Herstellung der Folie in der Mitte der Folienbahn gemessen. Das $e_{max}$-Verhältnis wird ebenfalls direkt nach der Herstellung der Folie gemessen, jedoch in diskreten Abständen über die gesamte Breite der Folienbahn.

Erfindungsgemäß ist die Folie durch einen niedrigen R-Wert gekennzeichnet. Der R-Wert ist ein Maß für die Orientierung der Folie und ersetzt im Fall der vorliegenden Erfindung die sonst üblichen Orientierungsmaße $\Delta n$, $n_{av}$ oder $\Delta p$. Diese können nur bei einer transparenten Folie gemessen werden, nicht aber bei dieser weißen Folie.

Der R-Wert der Folie wird in der Mitte der Foliebahn unter einem Winkel von 45° zur Maschinenrichtung (MD-Richtung) gemessen und zwar einmal rechts zur MD-Richtung und das andere Mal links zur Maschinenrichtung (siehe Messvorschrift auf Seite 16). Bei dieser Vorschrift wird berücksichtigt (vgl. Figur 1), dass bei Jogurtdeckeln die Folie üblicher Weise unter einem Winkel von 45° zur Maschinenrichtung vom Becher abgezogen wird.

Beim Herstellungsprozess des Deckels (Lackieren, Bedrucken, Stanzen) wird von der Rolle aus gearbeitet. Die Rollenrichtung (= Bahnrichtung) der Folie entspricht dabei der Maschinenrichtung MD. Die Folienbahn wird dabei derart bedruckt, dass die auszustanzenden Deckel entweder exakt in Maschinenrichtung (MD) oder exakt quer zur Maschinenrichtung (TD) liegen. Daraus folgt, dass die Abziehrichtung des Deckels immer mit dem 45° Winkel zur Maschinenrichtung (MD) zusammenfällt. Aus diesem Grunde ist es daher erforderlich, den R-Wert unter einem Winkel von 45° zur Maschinenrichtung zu bestimmen.

Es wurde gefunden, dass das Aufreiß- und Weiterreißverhalten des Deckels umso günstiger ist, je kleiner der R-Wert der Folie ist. Außerdem ist dann die Tendenz der Folie zum Delaminieren sehr gering. Den Untersuchungen zur Folge beträgt der R-Wert der erfindungsgemäßen Folie weniger als 45 $N/mm^2$, bevorzugt weniger als 42 $N/mm^2$und besonders bevorzugt weniger 40 $N/mm^2$. Es wurde gefunden, dass im anderen Fall (R-Wert größer als 45 $N/mm^2$) die Folie insbesondere anfällig gegenüber Einreißen und Delaminierung ist. Dieser Nachteil muss dann über eine beträchtlich größere Dicke der Folie wettgemacht werden.

Weiterhin ist die erfindungsgemäße Folie durch ein niedriges $e_{max}$-Verhältnis gekennzeichnet. Das $e_{max}$-Verhältnis wird in definierten Abständen über die gesamte Bahnbreite der Maschinenrolle gemessen. Wie bei der Messung des R-Wertes geschieht dies unter einem Winkel von 45° zur Maschinenrichtung (MD-Richtung) und zwar einmal rechts zur MD-Richtung und das andere Mal links zur Maschinenrichtung (siehe Messvorschrift auf Seite 16). In der Folienbahnmitte ist das $e_{max}$-Verhältnis nahezu eins und vergrößert sich in der Regel umso mehr, je näher man zu den Folienrändern gelangt. Das $e_{max}$-Verhältnis beschreibt die Eigenschaften der Folie über die Breite der Rolle, insbesondere die Änderung der Eigenschaften gegenüber der Mitte der Folienbahn. Nach den vorliegenden Untersuchungen sind die anwendungstechnischen Voraussetzungen umso besser, je geringer das $e_{max}$-Verhältnis ist.

Das $e_{max}$-Verhältnis der erfindungsgemäßen Folie beträgt weniger als 2.5, bevorzugt weniger als 2.2 und besonders bevorzugt weniger als 2.0. Es wurde gefunden, dass im anderen Fall ($e_{max}$-Verhältnis ist größer als 2.5) die Folie anfällig gegenüber Einreißen und Delaminierung ist. Dieser Nachteil muss dann über eine größere Dicke der Folie wettgemacht werden, was aber unwirtschaftlich ist und außerdem ökologisch nicht vertretbar ist.

Die Folie ist in der Regel einschichtig aufgebaut. Sie kann daneben aber auch mehrschichtig aufgebaut sein. Für diesen Fall hat es sich als günstig erwiesen, den Schichtaufbau der Folie symmetrisch zu gestalten. Vorteilhafte Ausführungsformen mehrschichtiger Folien sind beispielsweise ABA oder ACBCA, wobei unter A die äußeren Deckschichten, unter C die Zwischenschichten und unter B die Basisschicht verstanden wird.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycoaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$,- $C(CH_3)_2-$, $-C(CF_3)_2$, -O-, -S- oder $-SO_2-$ steht. Daneben sind auch Bisphenole der Formel $HO-C_6H_4C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x, x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für eventuell vorhandene Deckschichten A oder für eventuell vorhandene Zwischenschichten C können prinzipiell die gleichen Polymere verwendet werden, wie zuvor für die Basisschicht B beschrieben wurde.

Zur Erzielung der vorgenannten Eigenschaften, insbesondere der niedrigen Transparenz und des gewünschten Weißgrades der Folie, werden zweckmäßigerweise in die Basisschicht B, eventuell aber auch in die vorhandenen anderen Schichten A und C die notwendigen Pigmente eingearbeitet. Hierbei hat es sich als günstig erwiesen, Titandioxid, Calciumcarbonat, Bariumsulfat, Zinksulfid oder Zinkoxid in einer geeigneten Größe und in einer geeigneten Konzentration zu verwenden. Bevorzugt wird Titandioxid verwendet. Das Titandioxid kann sowohl vom Rutil-Typ als auch vom Anatas-Typ sein. Die Korngröße des Titandioxids liegt zwischen 0.05 und 0.5 $\mu$m, bevorzugt zwischen 0.1 und 0.3 $\mu$m. Das Caciumcarbonat hat eine Korngröße zwischen 0.1 und 2.5 $\mu$m, bevorzugt ist jedoch eine Korngröße von 0.2 bis 2.0 $\mu$m. Das Bariumsulfat weist eine Korngröße von 0.3 bis 0.9 $\mu$m, vorzugsweise eine Korngröße von 0.4 bis 0.7 $\mu$m auf. Die Folie erhält durch die eingearbeiteten Pigmente ein brilliantes weißes Aussehen. Um zu dem gewünschten Weißgrad (> 60) und zu der gewünschten niedrigen Transparenz (> 60) zu gelangen, muss die Basisschicht hochgefüllt sein. Die Partikelkonzentration zur Erzielung der gewünschten niedrigen Transparenz liegt bei $\geq$ 3 Gew.-%, jedoch $\leq$ 50 Gew.-%, vorzugsweise bei $\geq$ 4 Gew.-%, jedoch $\leq$ 45 Gew.-% und ganz bevorzugt $\geq$ 5 % Gew.-%, jedoch $\leq$ 40 Gew.-%, bezogen auf die Basisschicht der Folie.

Zu einer weiteren Steigerung des Weißgrades werden geeignete optische Aufheller der Basisschicht und/oder den anderen Schichten zugesetzt. Geeignete optische Aufheller sind beispielsweise ®Hostalux KS oder ®Eastobrite OB-1.

Die Basisschicht B kann daneben zusätzlich übliche Additive, wie bspw. Stabilisatoren und/oder Antiblockmittel enthalten. Vorhandene weitere Schichten A und C enthalten zweckmäßiger Weise zusätzlich übliche Additive, wie bspw. Stabilisatoren und/oder Antiblockmittel. Sie werden üblicher Weise dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid, Kaolin oder vernetzte Polystyrol- oder Arcrylat-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Antiblockmittel und die Pigmente für die Erzielung des gewünschten Weißgrades und der niedrigen Transparenz der Folie können den einzelnen Schichten in den jeweils vorteilhaften Konzentrationen, z.B. als glykolische Dispersion während der Polykondensation oder über Masterbatche bei der Extrusion zugegeben werden.

Die Gesamtdicke der erfindungsgemäßen Polyesterfolie kann innerhalb bestimmter Grenzen variieren. Sie beträgt 10 bis 150 $\mu$m, insbesondere 15 bis 125 $\mu$m, vorzugsweise 20 bis 100 $\mu$m, wobei die Basisschicht B einen Anteil von vorzugsweise 40 bis 100 % an der Gesamtdicke hat.

Die Polymere für die Basisschicht B und für die weiteren Schichten A und C werden getrennten Extrudern zugeführt. Etwa vorhandene Fremdkörper oder Verunreinigungen lassen sich aus der Polymerschmelze vor der Extrusion abfiltrieren. Im Falle einer einschichtigen Folie wird die Schmelze in einer Monodüse zu einem flachen Schmelzefilm ausgeformt. Bei einer mehrschichtigen Folie werden die Schmelzen in einer Mehrschichtdüse zu flachen Schmelzefilmen ausgeformt und übereinander geschichtet. Anschließend wird der Monofilm oder der Mehrschichtfilm mit Hilfe einer Kühlwalze und gegebenenfalls weiteren Walzen abgezogen und verfestigt.

Die Erfindung betrifft weiterhin ein Verfahren zur Herstellung der erfindungsgemäßen Polyesterfolie nach dem an sich bekannten Extrusions- oder Koextrusionsverfahren.

Im Rahmen dieses Verfahrens wird so vorgegangen, dass die Schmelze/den einzelnen Schichten der Folie entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die

biaxial gestreckte Folie thermofixiert und gegebenenfalls an der zur Behandlung vorgesehenen Oberflächenschicht corona- oder flammbehandelt wird.

Die biaxiale Streckung (Orientierung) wird im Allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist.

Zunächst wird wie beim Extrusionsverfahren/Koextrusionsverfahren üblich, das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Folie wird auf einer oder mehreren Abzugswalzen abgezogen, wobei sie abkühlt und sich verfestigt.

Die biaxiale Verstreckung wird im Allgemeinen sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im Allgemeinen wird die Längsstreckung bei 80 bis 140 °C und die Querstreckung bei 90 bis 150 °C durchgeführt. Das Längsstreckverhältnis liegt allgemein im Bereich von 2.0:1 bis 6:1, bevorzugt von 2.5:1 bis 5.5:1. Das Querstreckverhältnis liegt allgemein im Bereich von 3.0:1 bis 5.0: 1, bevorzugt von 3.5:1 bis 4.5:1. Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Für die Herstellung einer Folie mit sehr gutem Abzieh- und Delaminierungsverhalten (die Folie darf beim Abziehen nicht Delaminieren) ist es erfindungswesentlich, daß der R-Wert kleiner als 45 N/mm$^2$ und das $e_{max}$-Verhältnis kleiner als 2.5 ist. In diesem Fall ist die Festigkeit der Folie in Dickenrichtung so groß, dass beim Abziehen des Deckels vom Becher die Folie definitiv nicht delaminiert, bzw. nicht einreißt oder weiterreißt.

Es hat sich herausgestellt, dass die wesentlichen Einflussgrößen auf den R-Wert und das $e_{max}$ -Verhältnis die Verfahrensparameter in der Längsstreckung und in der Querstreckung sind, sowie die Standard-Viskosität (SV-Wert bevorzugt im Bereich von 700 bis 900) des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$) und die Folienbahngeschwindigkeit.

Erhält man beispielsweise auf einer Folienanlage R-Werte und $e_{max}$-Verhältnisse, die oberhalb der erfindungsgemäßen Werte liegen, so können erfindungsgemäße Folien hergestellt werden, indem man in der Längsstreckung und in der Querstreckung die Temperaturen erhöht und/oder in der Längsstreckung und in der Querstreckung die Streckverhältnisse erniedrigt. Übliche Werte für die genannten Parameter bei nicht erfindungsgemäßen Folien sind z.B.

| | Längsstreckung | Querstreckung |
|---|---|---|
| Strecktemperaturen | 100 bis 118 °C | 100 bis 120 °C |
| Streckverhältnisse | 4.2 bis 5.0 | 4.1 bis 5.0 |

Bei den erfindungsgemäßen Folien liegen die Temperaturen und Streckverhältnisse dagegen innerhalb von Bereichen, wie sie die untenstehende Tabelle wiedergibt.

| | Längsstreckung | Querstreckung |
|---|---|---|
| Strecktemperaturen | 120 bis 135 °C | 120 bis 140 °C |
| Streckverhältnisse | 2.5 bis 4.0 | 3.5 bis 4.0 |

Ein weiteres Absenken des Streckverhältnisses ist nachteilig, da sich in der Folie Defekte zeigen, die unerwünscht sind. Wird beispielsweise das Längsstreckverhältnis unterhalb einem Wert von 2.5 abgesenkt, so erhält man in der Folie Querschläge, die man z.B. nach dem Metallisieren der Folie deutlich in der Metallschicht sieht.

Erhält man beispielsweise mit einer Folienproduktionsmaschine einen R-Wert von 50 N/mm$^2$ und ein $e_{max}$ von 3.0 mit dem Parametersatz $\lambda_{MD}$ = 4.5 und $\lambda_{TD}$ = 4.2, den Strecktemperaturen in Längs- und in Querrichtung $T_{MD}$ = 115 °C und $T_{TD}$ = 125 °C, so erhält man durch Erhöhung der Längsstrecktemperatur auf $T_{MD}$ = 125 °C oder durch Erhöhung

der Querstrecktemperatur auf $T_{TD}$ = 135 °C oder durch Absenkung des Längstreckverhältnisses auf $\lambda_{MD}$ = 3.8 oder durch Absenkung des Querstreckverhältnisses auf $\lambda_{TD}$ = 3.6 ein R-Wert von 38. Überraschenderweise hat sich dabei herausgestellt, dass durch diese Maßnahmen auch das $e_{max}$ -Verhältnis in den erfindungsgemäßen Bereich gelangt ($e_{max}$=1.5). Die Folienbahngeschwindigkeit betrug hierbei 140 m/min. Die angegeben Temperaturen beziehen sich bei der Längsstreckung auf die jeweiligen Walzentemperaturen und bei der Querstreckung auf die Folientemperaturen, die mittels IR (infrarot) gemessen wurden.

Bei der nachfolgenden Thermofixierung wird die Folie etwa 0.1 bis 10 s lang bei einer Temperatur von 150 bis 250 °C gehalten. Anschließend wird die Folie in üblicher Weise aufgewickelt.

Als generelle Anweisung zur Erreichung des erfindungsgemäßen R-Werts und des erfindungsgemäßen $e_{max}$-Verhältnisses kann zweckmäßiger Weise so verfahren werden, dass man - ausgehend von einem Parametersatz bei dem Folie mit nicht erfindungsgemäßen R-Werten und $e_{max}$-Verhältnissen erhalten werden - entweder:

a) die Strecktemperatur in MD-Richtung um $\Delta T$= 3 bis 15 K erhöht, bevorzugt um $\Delta T$ = 5 bis 12 K erhöht und besonders bevorzugt um $\Delta T$ = 7 bis 10 K erhöht oder

b) das Streckverhältnis in MD-Richtung um $\Delta\lambda$ = 0.3 bis 0.8 erniedrigt, bevorzugt um $\Delta\lambda$ = 0.35 bis 0.7 erniedrigt und besonders bevorzugt um $\Delta\lambda$ = 0.4 bis 0.6 erniedrigt oder

c) die Strecktemperatur in TD-Richtung um $\Delta T$ = 4 bis 15 K erhöht, bevorzugt um $\Delta T$ = 5 bis 12 K erhöht und besonders bevorzugt um $\Delta T$ = 6 bis 10 K erhöht oder

d) das Streckverhältnis in TD-Richtung um $\Delta\lambda$ = 0.3 bis 0.8 erniedrigt, bevorzugt um $\Delta\lambda$ = 0.35 bis 0.7 erniedrigt und besonders bevorzugt um $\Delta\lambda$ = 0.4 bis 0.6 erniedrigt.

Sofern zweckmäßig, können auch eine oder mehrere der obigen Maßnahmen a) bis d) miteinander kombiniert werden. Als besonders günstig hat es sich dabei erwiesen, die Maßnahmen a) und b) miteinander zu kombinieren.

Bevorzugt wird/werden nach der biaxialen Streckung eine oder beide Oberfläche/n der Folie nach einer der bekannten Methoden corona- oder flammbehandelt. Die Behandlungsintensität liegt im Allgemeinen im Bereich über 45 mN/m.

Zur Einstellung weiterer gewünschter Eigenschaften kann die Folie zusätzlich beschichtet werden. Typische Beschichtungen sind haftvermittelnde, antistatisch, schlupfverbessernd oder dehäsiv wirkende Schichten. Es bietet sich an, diese zusätzliche Schichten über inline coating mittels wässriger Dispersionen vor dem Streckschritt in Querrichtung auf die Folie aufzubringen.

Zur Verbesserung der Druckfarbenhaftung empfiehlt es sich, wässrige Dispersionen zu verwenden, bei denen die Wirkstoffe auf Basis von Acrylaten aufgebaut sind. Hier wiederum empfiehlt es sich, bevorzugt solche Acrylate zu verwenden, die nicht zur Gelbverfärbung des Regenerates führen. In diesem Zusammenhang wird hier ausdrücklich auf Beschichtungen verwiesen, wie sie z.B. in der EP-A-0 605 130 beschrieben sind.

Die erfindungsgemäße Folie zeichnet sich durch eine gute Verarbeitbarkeit, insbesondere aber durch ein hervorragendes Abziehverhalten der Folie vom Becher aus. Insbesondere ist bei der erfindungsgemäßen Folie die Tendenz zum Ein- und Weiterreißen und zum Delaminieren äußerst gering.

Außerdem besticht die Folie durch einen hervorragenden Weißgrad, der der Folie zusätzlich ein sehr attraktives, werbewirksames Aussehen verleiht.

Bei der Herstellung der Folie ist gewährgeleistet, dass das Regenerat in einer Konzentration von 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die nachstehende Tabelle (Tabelle 1) fasst die wichtigsten erfindungsgemäßen Folieneigenschaften noch einmal zusammen.

**Tabelle 1**

| | Erfindungsgemäßer Bereich | bevorzugt | besonders bevorzugt | Einheit | Mess-methode |
|---|---|---|---|---|---|
| R-Wert | < 45 | < 42 | < 40 | $N/mm^2$ | intern |
| $e_{max}$-Verhältnis | < 2.5 | < 2.2 | < 2.0 | | intern |
| Transparenz | < 60 | < 55 | < 50 | % | |
| Weißgrad | > 60 | > 65 | > 70 | % | Berger |
| Dicke | 10-150 | 15-125 | 20-100 | µm | |
| Glanz (20° Messwinkel) | > 40 | > 45 | > 50 | | |
| Füllstoffkonzentration der Basisschicht | > 3 | > 4 | > 5 | % | |

Zur Charakterisierung der Rohstoffe und der Folien wurden die folgenden Messwerte benutzt:

**Transparenz**

Die Transparenz wird nach ASTM-D 1033-77 gemessen.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®"ELREPHO" der Firma Zeiss, Oberkochem (DE), Normlichtart C, 2° Normalbeobachter. Der Weißgrad wird als WG = RY + 3RZ - 3RX definiert.

WG = Weißgrad, Rx, Ry, Rz = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung",Verlag Beruf und Schule, Itzehoe (1989), beschrieben.

**SV (DCE), IV (DCE)**

Die Standardviskosität SV (DCE) wird angelehnt an DIN 53726 in Dichloressigsäure gemessen.

Die intrinsische Viskosität (IV) berechnet sich wie folgt aus der Standardviskosität (SV)

$$IV\ (DCE) = 6.67 \cdot 10^{-4}\ SV\ (DCE) + 0.118$$

**Oberflächenspannung**

Die Oberflächenspannung wurde mittels der so genannten Tintenmethode (DIN 53 364) bestimmt.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

**Bestimmung des R-Wertes**

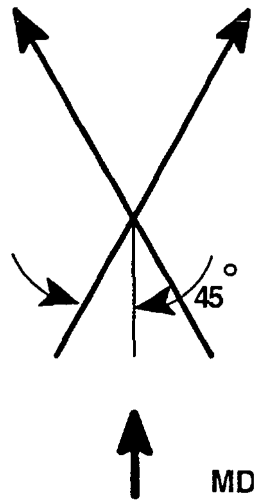


Der R-Wert der Folie wird direkt nach der Herstellung der Folie in der Mitte der Folienbahn gemessen. Wie die Skizze zeigt, werden dazu 2 Folienstreifen von 15mm Breite und 200 mm Länge (rechts und links) jeweils unter 45° zur Maschinenrichtung aus der Bahnmitte der Folie herausgeschnitten und in ein Zug-Dehnungsmessgerät (z.B. Zwick, Instron) eingespannt und gedehnt. Der R-Wert wird unter Zugrundelegung folgender Gleichung berechnet:

$$\text{R-Wert} = 1/3 \times (\sigma_{30\%} - \sigma_{0.2\%}) \qquad \text{in} \quad \text{N/mm}^2$$

In dieser Gleichung haben die Messgrößen $\sigma_{30\%}$ und $\sigma_{0.2\%}$ die folgende Bedeutung:

$\sigma_{30\%}$, Zugspannung in der Folie bei 30 % Dehnung, gemessen unter 45° zur Maschinenrichtung (MD), einmal zur linken und einmal zur rechten Seite der MD-Richtung.

$\sigma_{0.2\%}$, Zugspannung in der Folie bei 0.2 % Dehnung, gemessen unter 45° zur Maschinenrichtung (MD), einmal zur linken und einmal zur rechten Seite der MD-Richtung.

Bei der erfindungsgemäßen Folie muss der R-Wert der Folie kleiner sein als:

R-Wert < 45 N/mm$^2$, rechts und links

**Bestimmung des $e_{max}$**

Das $e_{max}$-Verhältnis wird direkt nach der Herstellung der Folie über die gesamte Breite der Folienbahn (über die Breite der Maschinenrolle) gemessen. Wie bei der Messung des R-Wertes wird auch das $e_{max}$ -Verhältnis unter einem Winkel von 45° zur Maschinenrichtung (MD-Richtung) und zwar einmal rechts zur MD-Richtung und das andere Mal links zur Maschinenrichtung gemessen. In der Folienbahnmitte ist das $e_{max}$ -Verhältnis nahezu eins und vergrößert sich umso mehr, je weiter man von der Folienbahnmitte zu den Folienrändern gelangt. Der Abstand zwischen zwei Messpunkten (in TD-Richtung, = Breitenrichtung der Folienbahn) beträgt dabei üblicher Weise 50 cm. Wie bei der Bestimmung des R-Wertes werden auch hier 2 Folienstreifen von 15mm Breite und 200 mm Länge (rechts und links) jeweils unter 45° zur Maschinenrichtung aus der Folienbahn herausgeschnitten. Die Muster werden dann wiederum in das Zug-Dehnungsmessgerät (z.B. Zwick, Instron) eingespannt und gedehnt. Das $e_{max}$ - Verhältnis wird unter Zugrundelegung der folgenden Gleichung berechnet:

$$e_{max}\text{ -Verhältnis} = \varepsilon_{linkks}/\varepsilon_{rechts} \text{ oder } \varepsilon_{rechts}/\varepsilon_{links} \quad \text{(welches definitionsgemäß immer >1 ist)}$$

$\varepsilon_{links}$ ist die Reißdehnung der Folie unter 45° zu MD, links
$\varepsilon_{rechts}$ ist die Reißdehnung der Folie unter 45° zu MD, rechts

Von der Definition her ist das emax-Verhältnis immer größer als 1. Bei der Messsung über die Folienbahnbreite folgt daraus, dass ungefähr für die erste Hälfte der Bahn die erste Relation ($\varepsilon_{links}/\varepsilon_{rechts}$) gilt und für die zweite Hälfte der Bahn die zweite Relation gilt ($\varepsilon_{rechts}/\varepsilon_{links}$). Bei der erfindungsgemäßen Folie muss das $e_{max}$-Verhältnis der Folie kleiner sein als:

$e_{max}$ -Verhältnis < 2.5, rechts und links

**Beurteilung des Abziehverhaltens der Folie vom Becher**

Die Beurteilung des Abziehverhaltens der Folie vom Becher erfolgt visuell. Bei diesem Prüfverfahren wird die Folie (der Deckel) auf den Becher geklebt (Siegellack war Novacoate) und nach einer Lagerzeit (Aushärtzeit) von 48 h vom Becher abgezogen. Das Abziehverhalten wird mit
++ (= gut) bewertet, wenn die Folie dabei weder einreißt noch delaminiert.
-- (= schlecht) bewertet, wenn die Folie dabei einreißt und/oder delaminiert.

**Beispiel 1**

Chips aus Polyethylenterephthalat (hergestellt über das Umesterungsverfahren mit Mn als Umesterungskatalysator, Mn-Konzentration: 70 ppm) wurden bei 150°C auf eine Restfeuchte von unterhalb 100 ppm getrocknet und dem Extruder für die Basisschicht

B zugeführt. Ebenfalls wurden Chips aus Polyethylenterephthalat und einem Füllstoff (Titandioxid und Calciumcarbonat) dem Extruder für die Basisschicht B zugeführt.

Es wurde durch Extrusion und anschließende stufenweise Orientierung in Längs- und in Querrichtung eine weiße, einschichtige Folie mit einer Gesamtdicke von 65 µm hergestellt.

Basisschicht B:

| | |
|---|---|
| 92.6 Gew.-% | Polyethylenterephthalat mit einem SV-Wert von 800 |
| 7.0 Gew.-% | Titandioxid (®Hombitan LW-S-U, der Fa. Sachtleben) mit einem mittlerem Teilchendurchmesser von ca. 0.3 µm |
| 0.4 Gew.-% | Calciumcarbonat (®Hydrocarb 70 der Fa. Omya) mit einem mittleren Teilchendurchmesser von ca. 1.8 µm |

Die Herstellungsbedingungen in den einzelnen Verfahrensschritten waren:

| | | |
|---|---|---|
| Längsstreckung: | Temperatur: | 80-125°C |
| | Längsstreckverhältnis: | 3.6 |
| Querstreckung: | Temperatur: | 80-135°C |
| | Querstreckverhältnis: | 4.0 |

Die Folie zeigte das gewünschte Verarbeitungsverhalten und insbesondere das gewünschte Verhalten beim Abziehen der Folie vom Becher. Die Folie reißt nicht ein und zeigt keine Tendenz zum Delaminieren.

Die erzielten Folieneigenschaften derart hergestellter Folien sind in der Tabelle 2 dargestellt. In Figur 2 ist das $e_{max}$ -Verhältnis über die Folienbahnbreite grafisch dargestellt.

**Beispiel 2**

Im Vergleich zu Beispiel 1 wurde nur die Rezeptur für die Basischicht geändert:

Basisschicht B:

| | |
|---|---|
| 93.0 Gew.-% | Polyethylenterephthalat mit einem SV-Wert von 800 |
| 7.0 Gew.-% | Titandioxid (Hombitan LW-S-U, der Fa. Sachtleben) mit einem mittlerem Teilchendurchmesser von ca. 0.3 μm |

**Vergleichsbeispiel 1**

Im Vergleich zu Beispiel 1 wurden jetzt die Verfahrensbedingungen geändert.

| | | |
|---|---|---|
| Längsstreckung: | Temperatur: | 80-118°C |
| | Längsstreckverhältnis: | 4.0 |
| Querstreckung: | Temperatur: | 80-125°C |
| | Querstreckverhältnis: | 4.0 |

Die Folie zeigte nicht das gewünschte Verarbeitungsverhalten und insbesondere nicht das gewünschte Verhalten beim Abziehen der Folie vom Becher. Die Folie reißt ein und zeigte eine hohe Tendenz zum Delaminieren.

**Tabelle 2**

| Beispiel | Dicke der Folie µm | Folienbahnbreite m | R-Wert $Nmm^2$ | $e_{max}$ Verhältnis | Transparenz | Weißgrad | Glanz | Verarbeitungsverhalten | Abziehverhalten der Folie |
|---|---|---|---|---|---|---|---|---|---|
| Beispiel 1 | 65 | 5 | 39 | 1.8 | 28 | 90 | 60 | ++ | ++ |
| Beispiel 2 | 65 | 5 | 38 | 1.8 | 29 | 88 | 60 | ++ | ++ |
| Vergleichsbeispiel 1 | 65 | 5 | 50 | 2.7 | 28 | 90 | 60 | + | - |

Verarbeitungsverhalten
++ gut
-- schlecht

**Patentansprüche**

1. Weiße, biaxial orientierte Polyesterfolie mit einer Gesamtdicke von 10 bis 150 μm, mit mindestens einer Basisschicht B, **dadurch gekennzeichnet, daß** sie Füllstoffe in einer Konzentration von mehr als 3 Gew.-%, bezogen auf die Masse der Basisschicht der Folie, enthält,
der R-Wert links und rechts ≤ als 45 $N/mm^2$ und
das $e_{max}$-Verhältnis ≤ als 2.5 ist,
wobei der R-Wert = ⅓ • ($\sigma_{30\%}$-$\sigma_{0,2\%}$) in $N/mm^2$ ist und

$\sigma_{30\%}$ die Zugspannung in der Folie bei 30 % Dehnung, gemessen unter 45° zur Maschinenrichtung (MD), einmal zur linken und einmal zur rechten Seite der MD-Richtung und
$\sigma_{0.2\%}$ die Zugspannung in der Folie bei 0.2 % Dehnung, gemessen unter 45° zur Maschinenrichtung (MD), einmal zur linken und einmal zur rechten Seite der MD-Richtung ist und

das $e_{max}$-Verhältnis = $\varepsilon_{links}/\varepsilon_{rechts}$ oder $\varepsilon_{rechts}/\varepsilon_{links}$ ist (wobei das Verhältnis definitionsgemäß immer >1 ist) und wobei

$\varepsilon_{links}$ die Reißdehnung der Folie unter 45° zu MD, links, ist und
$\varepsilon_{rechts}$ die Reißdehnung der Folie unter 45° zu MD, rechts, ist.

2. Weiße, biaxial orientierte Polyesterfolie nach Anspruch 1, **dadurch gekennzeichnet, daß** der R-Wert ≤ 42 $N/mm^2$ ist.

3. Weiße, biaxial orientierte Polyesterfolie nach Anspruch 1 oder 2, **dadurch gekennzeichnet, daß** das $e_{max}$ -Verhältnis ≤ als 2.2 ist.

4. Weiße, biaxial orientierte Polyesterfolie nach einem oder mehreren der Ansprüche 1 bis 3, **dadurch gekennzeichnet, daß** die Folie einschichtig ist.

5. Weiße, biaxial orientierte Polyesterfolie nach einem oder mehreren der Ansprüche 1 bis 4, **dadurch gekennzeichnet, daß** es sich um eine symmetrische mehrschichtige Folie handelt.

6. Weiße, biaxial orientierte Polyesterfolie nach Anspruch 1, **dadurch gekennzeichnet, daß** die Füllstoffe aus einem oder mehreren der folgenden Materialien ausgewählt sind: Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der bei der Polyesterherstellung eingesetzten Dicarbonsäuren, Titandioxid, Kaolin und Polymerpartikel.

7. Verwendung einer weißen, biaxial orientierten Polyesterfolie gemäß Anspruch 1 mit mindestens einer Basisschicht B, wobei
der R-Wert links und rechts ≤ als 45 $N/mm^2$ und
das $e_{max}$-Verhältnis ≤ als 2.5 ist,
als Deckelfolie.

**Claims**

1. A white, biaxially oriented polyester film having a total thickness of from 10 to 150 μm, with at least one base layer B, **characterized in that** it contains fillers in a concentration of more than 3 % by weight, based on the mass of the base layer of the film,
the R value left and right is ≤ 45 $N/mm^2$ and
the $\varepsilon_{max}$ ratio is ≤ 2.5,
where the R value is = 1/3 • ($\sigma_{3o\,\%}$ - $\sigma_{0.2\,\%}$) in $N/mm^2$ and

$\sigma_{30\,\%}$ is the tensile stress in the film at 30 % strain, measured at 45 ° to the machine direction (MD), once to the left hand side and once to the right hand side of the MD direction, and

(continued)

$\sigma_{0.2\,\%}$ is the tensile stress in the film at 0.2 % strain, measured at 45 ° to the machine direction (MD), once to the left hand side and once to the right hand side of the MD direction, and

the $\varepsilon_{max}$ ratio is = $\varepsilon_{left}/\varepsilon_{right}$ or $\varepsilon_{right}/\varepsilon_{left}$ (where the ratio is by definition always > 1) and where

$\varepsilon_{left}$ is the breaking strain of the film at 45 ° to MD, left, and
$\varepsilon_{right}$ is the breaking strain of the film at 45 ° to MD, right.

**2.** The white, biaxially oriented polyester film as claimed in claim 1, **characterized in that** the R value ist 42 N/mm$^2$.

**3.** The white, biaxially oriented polyester film as claimed in claim 1 or 2, **characterized in that** the $\varepsilon_{max}$ ratio is 2.2.

**4.** The white, biaxially oriented polyester film as claimed in one or more of claims 1 to 3, **characterized in that** the film has one layer.

**5.** The white, biaxially oriented polyester film as claimed in one or more of claims 1 to 4, **characterized in that** the film is a symmetrical film having more than one layer.

**6.** The white, biaxially oriented polyester film as claimed in claim 1, **characterized in that** the fillers are selected from one or more of the following materials: calcium carbonate, amorphous silica, talc, magnesium carbonate, barium carbonate, calcium sulfate, barium sulfate, lithium phosphate, calcium phosphate, magnesium phosphate, aluminum oxide, lithium fluoride, the calcium, barium, zinc or manganese salts of the dicarboxylic acids used during polyester preparation, titanium dioxide, kaolin and polymer particles.

**7.** The use of a white, biaxially oriented polyester film as claimed in claim 1 with at least one base layer B, wherein
the R value left and right is ≤ 45 N/mm$^2$ and
the $\varepsilon_{max}$ ratio is ≤ 2.5,
as a lid film.

## Revendications

**1.** Film de polyester blanc, orienté biaxialement, ayant une épaisseur totale de 10 à 150 µm, comportant au moins une couche de base B, **caractérisé en ce qu'**il contient des charges à une concentration de plus de 3 % en poids, par rapport à la masse de la couche de base du film,
la valeur R à gauche et à droite est inférieure ou égale à 45 N/mm$^2$ et
le rapport des valeurs $e_{max}$ est inférieur ou égal à 2,5,
la valeur R étant égale à 1/3 . ($\sigma_{30\%}$ - $\sigma_{0,2\%}$) en N/mm$^2$ et

$\sigma_{30\%}$ étant la contrainte de traction dans le film à un allongement de 30 %, mesurée sous un angle de 45° par rapport au sens de la machine (MD), une fois du côté gauche et une fois du côté droit du sens MD et
$\sigma_{0,2\%}$ étant la contrainte de traction dans le film à un allongement de 0,2 %, mesurée sous un angle de 45° par rapport au sens de la machine (MD), une fois du côté gauche et une fois du côté droit du sens MD et

le rapport $e_{max}$ est égal à $\varepsilon_{gauche}/\varepsilon_{droit}$ ou $\varepsilon_{droit}/\varepsilon_{gauche}$ (le rapport étant par définition toujours supérieur à 1) et

$\varepsilon_{gauche}$ est l'allongement à la rupture du film sous un angle de 45° par rapport à MD, gauche, et
$\varepsilon_{droit}$ est l'allongement à la rupture du film sous un angle de 45° par rapport à MD, droit.

**2.** Film de polyester blanc, orienté biaxialement, selon la revendication 1, **caractérisé en ce que** la valeur R est inférieure ou égale à 42 N/mm$^2$.

3. Film de polyester blanc, orienté biaxialement, selon la revendication 1 ou 2, **caractérisé en ce que** le rapport $e_{max}$ est inférieur ou égal à 2,2.

4. Film de polyester blanc, orienté biaxialement, selon une ou plusieurs des revendications 1 à 3, **caractérisé en ce que** le film est monocouche.

5. Film de polyester blanc, orienté biaxialement, selon une ou plusieurs des revendications 1 à 4, **caractérisé en ce qu'**il s'agit d'un film multicouche symétrique.

6. Film de polyester blanc, orienté biaxialement, selon la revendication 1, **caractérisé en ce que** les charges sont choisies parmi une ou plusieurs des matières suivantes : le carbonate de calcium, l'acide silicique amorphe, le talc, le carbonate de magnésium, le carbonate de baryum, le sulfate de calcium, le sulfate de baryum, le phosphate de lithium, le phosphate de calcium, le phosphate de magnésium, l'oxyde d'aluminium, le fluorure de lithium, les sels de calcium, baryum, zinc ou manganèse des acides dicarboxyliques utilisés lors de la préparation du polyester, le dioxyde de titane, le kaolin et des particules de polymère.

7. Utilisation d'un film de polyester blanc, orienté biaxialement, selon la revendication 1, comportant au moins une couche de base B, où
la valeur R à gauche et à droite est inférieure ou égale à 45 $N/mm^2$ et
le rapport des valeurs $e_{max}$ est inférieur ou égal à 2,5,
en tant que film de couvercle.

Figur 1

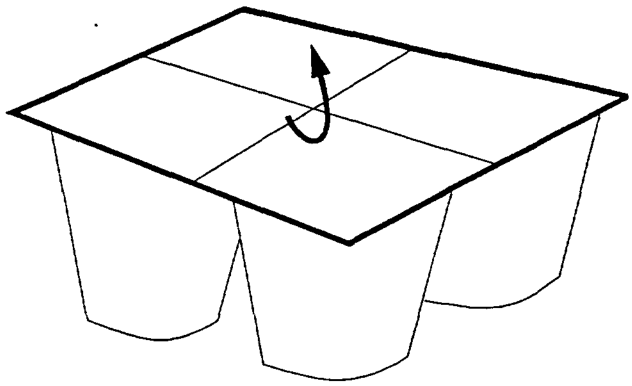

Figur 2

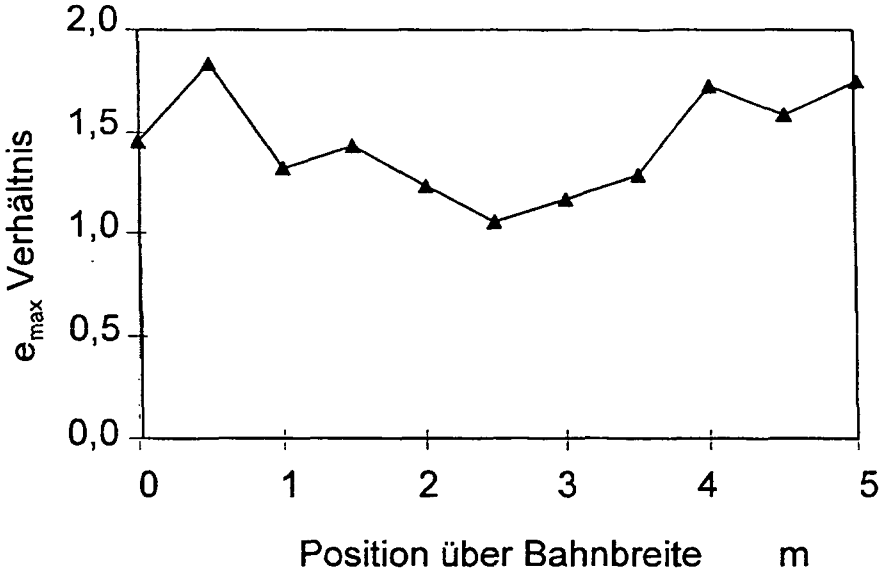

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0605130 A
- US 5776592 A